# EUROPÄISCHE PATENTSCHRIFT

(11) **EP 3 901 807 B1**
(45) Veröffentlichungstag und Bekanntmachung des Hinweises auf die Patenterteilung: **27.07.2022**
(21) Anmeldenummer: 20170397.2
(22) Anmeldetag: 20.04.2020
(51) Int. Cl.: G06F 21/60, H04L 9/06, H04L 9/32, H04L 61/4511, H04L 9/40, G06F 9/50, H04L 41/0806, H04L 67/10

(54) **ERSTELLEN EINES DOMAIN-NAME-SYSTEM-CONTAINER-IMAGES ZUM ERSTELLEN EINER DOMAIN-NAME-SYSTEM-CONTAINER-INSTANZ**
CREATION OF A DOMAIN NAME SYSTEM CONTAINER IMAGE FOR CREATING A DOMAIN NAME SYSTEM CONTAINER INSTANCE
CRÉATION D'UNE IMAGE DE CONTENEUR DE SYSTÈME DE NOM DE DOMAINE POUR CRÉER UNE INSTANCE DE CONTENEUR DE SYSTÈME DE NOM DE DOMAINE

(43) Veröffentlichungstag der Anmeldung: 27.10.2021
(73) Patentinhaber: Siemens Aktiengesellschaft, 80333 München (DE)
(72) Erfinder: Gessner, Jürgen, 85661 Forstinning (DE); Knierim, Christian, 81373 München (DE)

(56) Entgegenhaltungen:
- CN-A- 108 566 449
- Robert Kloosterhuis: "Setting up a vSphere lab with CoreDNS in Docker - The Fluffy Admin", , 26. November 2019 (2019-11-26), XP055734813, Gefunden im Internet: URL:https://thefluffyadmin.net/?p=1427 [gefunden am 2020-09-29]
- Russ Mckendrick: "Mastering Docker", , 31. Dezember 2015 (2015-12-31), XP055460815, Gefunden im Internet: URL:https://letsclearitup.com.ua/books/201 7/mastering_docker.pdf [gefunden am 2018-03-19]
- Anonymous: "sign - sign plugin for CoreDNS", , 6. Februar 2020 (2020-02-06), XP055734073, Gefunden im Internet: URL:https://coredns.io/plugins/sign/ [gefunden am 2020-09-25]

## Beschreibung

### HINTERGRUND DER ERFINDUNG

### Gebiet der Erfindung

Die vorliegende Erfindung betrifft ein Verfahren zum Speichern eines Domain-Name-System-Container-Images zum Erstellen zumindest einer Domain-Name-System-Container-Instanz in einer Domain-Name-System-Infrastruktur. Die vorliegende Erfindung betrifft außerdem ein Computerprogrammprodukt und ein Computerlesbares Medium.

### Beschreibung des Stands der Technik

Im Domain Name System (DNS) werden über DNS-Server in Netzwerken dezentral Informationen für eine DNS-Domäne bereitgestellt. Einzelne Endgeräte bzw. deren Applikationen können diese Informationen auslesen und verwenden, indem sie diese entweder direkt bei einem für eine DNS-Domäne hinterlegten DNS-Server anfragen oder hierfür einen z.B. vom Provider bereitgestellten DNS-Resolver verwenden, welcher dann die Anfrage an den DNS-Server der DNS-Domäne weiterleitet.

In einer DNS-Infrastruktur bereitgestellte DNS-Informationen umfassen die Auflösung von DNS-Namen auf eine IP-Adresse oder publizieren beispielsweise Ein- und Ausgänge der Emailinfrastruktur, die von Absendern oder Empfängern einer DNS-Domäne verwendet werden. Des Weiteren können beliebige weitere DNS-Informationen für die DNS-Domäne über die DNS-Infrastruktur in Netzwerken verteilt werden. Diese DNS-Informationen werden über Port 53 UDP und TCP bereitgestellt.

Ohne diese von der DNS-Infrastruktur bereitgestellten DNS-Informationen ist eine zuverlässige Kommunikation nicht möglich. Daher gelten für DNS-Informationen hohe Anforderungen bezüglich Verfügbarkeit und Integrität. Zur Integritätssicherung werden asymmetrische Verschlüsselungsverfahren verwendet. Die bei der Integritätssicherung verwendeten Schlüsselpaare bestehen aus einem privaten und öffentlichen Schlüssel. Mit dem privaten Schlüssel erfolgt die Signatur, der öffentliche Schlüssel wird zur Validierung der Signatur verwendet. Insbesondere der private Schlüssel, da dieser zur Gewährleistung der Integrität verwendet wird, sollte nicht aus der Kontrolle eines DNS-Domäneneigentümer gegeben werden.

Im Besonderen wird von Angreifern die Bereitstellung eines DNS-Dienstes über UDP ausgenutzt, indem die DNS-Server einer DNS-Domäne gezielt mit Hilfe von Botnetzen o.ä. mit Anfragen wahllos beschossen werden und somit eine dDOS-Attacke relativ einfach durchzuführen ist und in letzter Zeit auch gehäuft auftritt. Sämtliche DNS-Server einer DNS-Domäne sind im Besonderen im Internet einfach zu attackieren, da sich speziell die in externen DNS-Registern hinterlegte Anzahl an DNS-Server meistens auf vier DNS-Server, in manchen Fällen auf acht oder zehn, beschränkt und es - sofern weitere DNS-Server existieren, welche in der DNS-Zone hinterlegt sind - ausreicht, diese extern registrierten Server zu attackieren und somit die Verfügbarkeit der DNS-Informationen für die DNS-Domain zu unterbinden.

Aktuell können DNS-Server einer DNS-Domäne über folgende Mechanismen gegen Angriffe geschützt und die Verfügbarkeit der DNS-Informationen für die DNS-Domain erhalten werden:
- Die DNS-Server einer DNS-Domäne werden mit genügend große Rechenkapazitäten ausgestattet.
- Mehrere DNS-Server werden über Loadbalancer geclustert nach außen bereitgestellt werden.
- Vor die DNS-Server wird ein Caching-Proxy oder eine Firewall gestellt, welche Anfragen bekannter Angreifer blockiert und nicht zu den DNS-Server durchlässt.
- Das DNS-Protokoll selbst bietet Caching-Mechanismen an, die dafür sorgen, dass DNS-Resolver bereits angefragte DNS-Informationen für den vom DNS-Domäneneigentümer definierten Zeitraum zwischenspeichern können. Dieser Mechanismus unterdrückt jedoch nicht, dass ein Angreifer direkt den DNS-Server attackieren kann.

Außerdem können DNS-Server einer DNS-Domäne über das Protokoll DNSSEC gegen Angriffe geschützt und die Authentizität und Integrität der DNS-Information gewährleistet werden. Über das Protokoll DNSSEC kann jeder einzelne Eintrag über kryptographische Signaturen integritäts- und authentizitätsgesichert werden und damit von DNS-Resolvern validiert werden. DNSSEC kann somit als Ergänzung zu den Mechanismen gesehen werden, die die Verfügbarkeit der DNS-Informationen für die DNS-Domain erhalten. DNSSEC gewährleistet, dass die ausgelieferte DNS-Information auf Korrektheit überprüft werden kann. Die Aufgabe der Erfindung besteht darin, eine verbesserte Lösung, um die Integrität und Authentizität von DNS-Informationen sicherzustellen sowie die Verfügbarkeit von DNS-Informationen für eine DNS-Domain im Falle einer Überlastung zu gewährleisten, bereitzustellen.

Zum relevanten Stand der Technik gehören die Dokumente "Setting up a vSphere lab with CoreDNS in Docker - The Fluffy Admin" von Robert Kloosterhui, erschienen im Internet am 26. November 2019, URL: https://thefluffyadmin.net/?p=1427, sowie "Mastering Docker", von Russ Mckendrick, erschienen im Internet am 31. Dezember 2015, URL: https://letsclearitup.com.ua/books/2017/mastering_docker.pdf.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Weitere Weiterbildungen, Anwendungsmöglichkeiten und Vorteile der Erfindung ergeben sich aus der nachfolgenden Beschreibung und der Zeichnung.

Die Erfindung betrifft ein Verfahren zum Speichern zumindest eines Domain-Name-System-Container-Images (DNS-Container-Images), wobei das Domain-Name-System-Container-Image zum Erstellen zumindest einer Domain-Name-System-Container-Instanz (DNS-Container-Instanz) in einer Domain-Name-System-Infrastruktur (DNS-Infrastruktur) ausgebildet ist. Das Verfahren weist die folgenden Schritte auf:
- Erstellen mindestens einer signierten Domain-Name-System-Information (signierte DNS-Information), wobei die mindestens eine signierte Domain-Name-System-Information durch eine kryptographische Signierung einer Domain-Name-System-Information erstellt wird, wobei die kryptographische Signierung außerhalb der Domain-Name-System-Server-Infrastruktur, insbesondere bei einem Domain-Name-System-Domäneneigentümer (DNS-Domäneneigentümer) erstellt wird,
- Erstellen zumindest eines Domain-Name-System-Container-Images, wobei das zumindest eine Domain-Name-System-Container-Image die signierte Domain-Name-System-Information und mindestens eine Domain-Name-System-Server-Software aufweist und
- Speichern des zumindest einen Domain-Name-System-Container-Images in einer Container-Registry.

Ein Aspekt der Erfindung besteht darin, signierte Domain-Name-System-Information in einer container-basierten Domain-Name-System-Infrastruktur durch zumindest eine Domain-Name-System-Container-Instanz bereitzustellen, wobei die signierte Domain-Name-System-Information außerhalb der Domain-Name-System-Infrastruktur erstellt wird. Zur Signatur der Domain-Name-System-Information (Integritätssicherung der Domain-Name-System-Information) werden asymmetrische Verschlüsselungsverfahren verwendet. Die bei der Integritätssicherung verwendeten Schlüsselpaare bestehen aus einem privaten und öffentlichen Schlüssel. Mit dem privaten Schlüssel (Credential) erfolgt die Signatur, der öffentliche Schlüssel wird zur Validierung der Signatur verwendet. Insbesondere der private Schlüssel, da dieser zur Gewährleistung der Integrität verwendet wird, sollte nicht aus der Kontrolle eines DNS-Domäneneigentümer gegeben werden. Deshalb wird das signierte Domain-Name-System-Information außerhalb der Domain-Name-System-Infrastruktur erstellt.

Das Domain-Name-System (DNS) ist ein Dienst in vielen IPbasierten Netzwerken. Seine Hauptaufgabe ist die Beantwortung von Anfragen zur Namensauflösung. Das DNS funktioniert ähnlich wie eine Telefonauskunft. Der Benutzer kennt die Domain (den für Menschen merkbaren Namen eines Rechners im Internet) - zum Beispiel example.org. Diese sendet er als Anfrage in das Internet. Die Domain wird dann dort vom DNS in die zugehörige IP-Adresse (die "Anschlussnummer" im Internet) umgewandelt - zum Beispiel eine IPv4-Adresse der Form 192.0.2.42 oder eine IPv6-Adresse wie 2001:db8:85a3:8d3:1319:8a2e:370:7347 - und führt so zum richtigen Rechner. Eine Domain-Name-System-Infrastruktur ist die dem DNS zugrunde liegende Infrastruktur mit DNS-Namensraum, DNS-Server, DNS-Resolver und DNS-Protokoll. Die Domain-Name System-Infrastruktur, stellt die DNS-Informationen für einen Namensraum für ein Netzwerk zur Verfügung. Sie beinhaltet die DNS-Software, die DNS-Zonendatei für eine DNS-Domain und wird aus Verfügbarkeitsgründen auf mehreren geografisch verteilten Rechnersystemen (DNS-Servern) betrieben. DNS-Resolver können die DNS-Infrastruktur für eine DNS-Domain anfragen und somit eine Namensauflösung für einen anfragenden Client durchführen.

Die Erfindung bietet verschiedene Vorteile. Durch das Erstellen von Domain-Name-System-Container-Instanzen können dynamisch extreme Steigerungen der Rechenkapazitäten zur Beantwortung von DNS-Anfragen erreicht werden, welche mit einer auf virtuellen Maschinen basierten Lösung nicht in dieser Geschwindigkeit bereitgestellt werden können. Dies ist in der container-basierten Architektur begründet, welche um ein vielfaches ressourcenärmer als ein komplettes Betriebssystem einer virtuellen Maschine ist. Zudem kann in vorteilhafterweise ausgenutzt werden, dass Cloud-Provider üblicherweise deutlich höhere Bandbreiten und Rechnerressourcen als typische On-Premise-Rechenzentren zur Verfügung stellen können. Damit wird der Aufwand für einen DDOS-Angriff auf eine DNS-Infrastruktur dynamisch so stark erhöht, dass die Erfolgsaussichten für den Angriff sinken und damit die Verfügbarkeit des DNS-Dienstes gewährleistet ist.

Da sämtliche DNS-Informationen für eine DNS-Domäne bereits in der DNS-Container-Instanz enthalten sind, sind keine Zonentransfers erforderlich, welche die DNS-Informationen im DNS-Master/Slave-Verfahren verteilen. Hierdurch kann sich eine DNS-Container-Instanz ausschließlich um die Bereitstellung von DNS-Informationen für anfragende Clients kümmern. Der Synchronisationsaufwand, welcher im üblichen DNS-Master/Slave-Verfahren über Zonentransfers durchgeführt werden muss, entfällt, wodurch Ressourcen in der in der DNS-Container-Instanz betriebenen DNS-Server-Applikation eingespart werden.

DNS-Informationen werden durch eine kryptographische Signierung mittels DNSSEC integritäts- und authentizitätsgesichert ausgeliefert. Die zur Integritätssicherung erforderlichen privaten Signaturschlüssel werden außerhalb der DNS-Serverumgebung in einem gesicherten Bereich beim DNS-Domäneneigentümer vorgehalten und verlassen zu keiner Zeit das Hoheitsgebiet des DNS-Domäneneigentümers. Damit werden nicht autorisierte Änderungen verhindert, z.B. durch einen Cloud-Betreiber/Provider.

Durch die kryptographische Signierung und Integritätssicherung kann akzeptiert werden, dass ein Cloud-Betreiber/Provider - wie bei Container-as-a-Service Infrastrukturen üblich - keine Informationen über die von ihm betriebene Cloudarchitektur zur Verfügung stellt und keine detaillierte Risikoüberprüfung für die DNS-Server-Infrastruktur durchgeführt wird. Zudem kann durch die Integritätssicherung eine kostengünstigere, weniger abgesicherte Infrastruktur eingekauft werden.

In einer Weiterbildung der Erfindung bedeutet das Erstellen der kryptographischen Signierung bzw. der signierten Domain-Name-System-Information außerhalb der Domain-Name-System-Server-Infrastruktur, dass die kryptographische Signierung bei dem DNS-Domäneneigentümer durchgeführt wird.

Nach einem Aspekt der Erfindung können in den Domain-Name-System-Container-Instanzen/Domain-Name-System-Container-Images mehrere DNS-Informationen, auch als DNS-Zonendateien bezeichenbar, für unterschiedliche DNS-Namensräume vorgehalten werden. Es muss jedoch mindestens eine DNS-Informationen sein.

Nach einem Aspekt der Erfindung besteht die Domain-Name-System-Infrastruktur mindestens einmal, ist aber in typischerweise an unterschiedlichen Orten in mehrfacher Ausführung identisch aufgebaut und wird insbesondere durch einem Cloud-Provider bereitgestellt.

Nach einem Aspekt der Erfindung ist die Container-Registry ein Software-Repository, in dem die Domain-Name-System-Container-Images hinterlegt sind. Die Container-Registry kann entweder für alle Domain-Name-System-Infrastrukturen zentral bereitgestellt werden oder alternativ an jedem Ort, an dem eine Domain-Name-System-Infrastruktur ausgebildet ist, bereitgestellt werden.

Die kryptographische Signierung hat den Vorteil, dass die DNS-Informationen integritäts- und authentizitätsgesichert werden und somit sichergestellt ist, dass die DNS-Informationen authentisch und nicht unautorisiert verändert sind.

In einer weiteren Weiterbildung der Erfindung weist das Verfahren die weiteren Verfahrensschritte auf:
- Zugreifen auf das zumindest eine Domain-Name-System-Container-Image in der Container-Registry und
- Ausführen des zumindest einen Domain-Name-System-Container-Images, wobei durch das Ausführen des zumindest einen Domain-Name-System-Container-Images die zumindest eine Domain-Name-System-Container-Instanz in der Domain-Name-System-Infrastruktur erstellt wird.

Die erfindungsgemäßen Schritte des Zugreifens auf das zumindest eine Domain-Name-System-Container-Images und des Ausführens des zumindest einen Domain-Name-System-Container-Images können von einem DNS-Domäneneigentümer selbst durchgeführt werden oder in einer alternativen Ausführungsform von einem Cloud-Provider bzw. Anbieter der Container-Infrastruktur durchgeführt werden.

Das Ausführen des zumindest einen Domain-Name-System-Container-Images kann auch als Inbetriebnahme einer DNS-Container-Instanz oder als Orchestrierung bezeichnet werden.

Die Orchestrierung führt eine Orchestrierungssoftware durch. Die Orchestrierungssoftware kann sowohl für jeden einzelnen Ort, an dem die Domain-Name-System-Infrastruktur aufgebaut ist, separat aufgebaut sein oder zentral alle aufgebauten Laufzeitumgebungen/Domain-Name-System-Infrastrukturen an den unterschiedlichen Orten steuern.

Wenn die erfindungsgemäßen Schritte des Zugreifens auf das zumindest eine Domain-Name-System-Container-Images und des Ausführens des zumindest einen Domain-Name-System-Container-Images von einem Cloud-Provider/Provider durchgeführt werden, benötigt dieser lediglich Zugriff auf die Container-Registry. Der Übergabepunkt wäre in diesem Fall die Container-Registry. In diesem Fall stellt der DNS-Domäneneigentümer das Domain-Name-System-Container-Image mit der signierte Domain-Name-System-Information in die Container-Registry ein. Die Container-Registry kann entweder auf der Seite des DNS-Domäneneigentümers oder beim Cloud-Provider liegen.

Sofern ein DNS-Domäneneigentümer keinen Zugriff auf die Orchestrierungssoftware zum Durchführen der erfindungsgemäßen Schritte des Zugreifens auf das zumindest eine Domain-Name-System-Container-Images und des Ausführens des zumindest einen Domain-Name-System-Container-Images hat, prüft der Provider periodisch (z.B. stündlich), ob es eine neue Version des Domain-Name-System-Container-Images gibt und lädt gegebenenfalls die aktuelle Version des Domain-Name-System-Container-Images.

In einer weiteren Weiterbildung hat der DNS-Domäneneigentümer Zugriff auf die Orchestrierungssoftware bzw. auf die relevanten Funktionen bei der Orchestrierungssoftware und das Durchführen der erfindungsgemäßen Schritte des Zugreifens auf das zumindest eine Domain-Name-System-Container-Images und des Ausführens des zumindest einen Domain-Name-System-Container-Images kann durch den DNS-Domäneneigentümer getriggert werden.

In einer weiteren Weiterbildung der Erfindung weist das Verfahren den weiteren Verfahrensschritt des Beantwortens von Anfragen an die mindestens eine Domain-Name-System-Container-Instanz und/oder ein Ausliefern von Daten aus der mindestens einen Domain-Name-System-Container-Instanz auf. Einzelne Endgeräte bzw. deren Applikationen können DNS-Informationen aus Domain-Name-System-Container-Instanzen auslesen und verwenden, in dem sie entweder direkt den für eine DNS-Domäne hinterlegten DNS-Server oder Domain-Name-System-Container-Instanz anfragen oder hierfür einen z.B. vom Provider bereitgestellten DNS-Resolver verwenden, welcher dann die Anfrage an den DNS-Server bzw. die Domain-Name-System-Container-Instanz der DNS-Domäne weiterleitet.

In einer weiteren Weiterbildung wird, die mindestens eine signierten Domain-Name-System-Information unter einer Zugriffssicherung erstellt. Die Zugriffssicherung kann zum Beispiel durch einen abgesicherten Ort, z.B. abgesicherter Bereich in einem Rechenzentrum hergestellt werden. Das hat den Vorteil, dass die Domain-Name-System-Information integritätsgeschützt und nicht manipulierbar sind. Das hat den Vorteil, dass die Daten nicht von Angreifern oder Unbefugten änderbar sind.

In einer weiteren Weiterbildung wird die Zugriffssicherung durch eine Firewall erstellt. Das hat den Vorteil, dass die mindestens eine signierten Domain-Name-System-Information an einem durch eine Firewall geschützten Ort erstellt wird.

In einer weiteren Weiterbildung werden Schlüssel der Zugriffssicherung durch ein Hardware-Sicherheitsmodul geschützt. Alternativ können die Schlüssel z.B. durch eine kryptographische Offline-Signierung geschützt werden. Hierbei werden verschlüsselte Datenpartitionen verwendet, die nur während dem Vorgang der Signatur eingehängt werden. Ein Administrator des Servers, an dem die Signatur durchgeführt wird, gibt ein Passwort für die Entschlüsselung ein.

Alternativ ist die Zugriffssicherung dadurch sichergestellt, dass der Ort, an dem die kryptographische Signierung durchgeführt wird, zum Beispiel über einen Hop-Server und/oder VPN-Tunnel erreichbar ist, wobei der VPN-Tunnel mittels Zwei-Faktor-Authentisierung aufbaubar ist und eine Verbindung nur von Seiten der Domain-Name-System-Information initiierbar ist.

Alternativ ist die Zugriffssicherung dadurch sichergestellt, dass der Ort, an dem die kryptographische Signierung durchgeführt wird, nicht nach außen (z.B. zum Internet hin) exponiert ist.

In einer weiteren Weiterbildung wird die Domain-Name-System-Server-Infrastruktur mittels mindestens eines Cloud-Netzwerks bereitgestellt. Das Cloud-Netzwerk kann an allen Lokationen von demselben Cloud-Provider bereitgestellt werden oder an jedem Standort von unterschiedlichen Cloud-Provider bereitgestellt werden. Das hat den Vorteil, dass eine Skalierung und ein Einsatz einer variablen Anzahl an Domain-Name-System-Container-Instanz realisiert werden kann.

In einer weiteren Weiterbildung wird die kryptographische Signierung als DNSSEC-Signierung erstellt. Die DNSSEC-Signierung hat den Vorteil, dass dadurch eine Integritätssicherung der DNS-Informationen erstellt wird. Die zur Integritätssicherung erforderlichen Signaturschlüssel werden außerhalb der DNS-Serverumgebung in einem gesicherten Bereich beim DNS-Domäneneigentümer vorgehalten und verlassen zu keiner Zeit das Hoheitsgebiet des DNS-Domäneneigentümer. Damit werden nicht autorisierte Änderungen verhindert, z.B. durch einen Cloud-Betreiber/Provider.

In einer weiteren Weiterbildung wird ein Auslastungsgrad der Domain-Name-System-Container-Instanz bestimmt. Der Auslastungsgrad, auch als Auslastung der einzelnen DNS-Container-Instanzen bezeichenbar, wird permanent oder zu vorgegebenen Zeitpunkten wiederholt und/oder periodisch durch eine Orchestrierungssoftware überprüft. Das hat den Vorteil, dass der Auslastungsgrad zu den vorgegebenen Zeitpunkten bekannt ist. So kann eine bevorstehende Überlastung zeitnah erkannt werden.

In einer weiteren Weiterbildung wird eine Anzahl an Domain-Name-System-Container-Instanzen in Abhängigkeit des Auslastungsgrads bestimmt. Das hat den Vorteil, dass auf den Auslastungsgrad reagiert wird und eine Überlastung vermieden werden kann.

Nach einem Aspekt der Erfindung wird im Falle eines Angriffes für jede Lokation der DNS-Infrastruktur die Anzahl an Domain-Name-System-Container-Instanzen automatisch für die Dauer des Angriffes erhöht und somit temporär deutlich mehr Kapazität bereitgestellt als dies bei einer serverbasierten Lösung der Fall wäre. Im Extremfall kann durch die containerbasierte Infrastruktur die Kapazität temporär so hoch gewählt werden, dass die bereitgestellte Rechenkapazität bei Lastspitzen, die sonst für die übliche Grundlast erforderliche Kapazität um ein Vielfaches übersteigt.

In einer weiteren Weiterbildung wird die Anzahl durch ein Zuschalten und ein Abschalten von Domain-Name-System-Container-Instanz eingestellt. Für jede einzelne DNS-Infrastruktur Lokation wird somit eine containerbasierte Infrastruktur vorgeschlagen, welche lastabhängig DNS-Container-Instanzen hoch- und runterskaliert.

In einer weiteren Weiterbildung wird das Zuschalten und/oder das Abschalten durch eine Orchestrierungssoftware durchgeführt. Die Hoch- und Runterskalierung der DNS-Container-Instanzen erfolgt somit an jeder Lokation der DNS-Infrastruktur über die Orchestrierungssoftware, welche auch die Auslastung der einzelnen DNS-Container-Instanzen permanent überprüft.

Nach einem Aspekt der Erfindung verteilt an jedem Standort ein Loadbalancer ankommenden Anfragen auf die Domain-Name-System-Container-Instanzen. Die Konfiguration des Loadbalancer wird bei jedem Hoch- und Runterskalieren bzw. Zuschalten und/oder das Abschalten von Domain-Name-System-Container-Instanz der Orchestrierungssoftware selbständig angepasst. Würde die Orchestrierungssoftware dies nicht tun, könnten neu hinzugeschaltete Domain-Name-System-Container-Instanzen nicht von außen angesprochen/angefragt werden oder ankommende Anfragen würden ins Leere laufen, wenn Domain-Name-System-Container-Instanzen nicht mehr vorhanden sind.

In einer weiteren Weiterbildung der Erfindung wird das Zuschalten und/oder das Abschalten durch eine Container-as-a-Service Lösung umgesetzt. Alternative wäre, dass die Domain-Name-System-Container-Instanzen auf dediziert vorgesehenen Maschinen als Container betrieben werden.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

### KURZE BESCHREIBUNG DER ZEICHNUNG

Die Besonderheiten und Vorteile der Erfindung werden aus den nachfolgenden Erläuterungen mehrerer Ausführungsbeispiele anhand der schematischen Zeichnung ersichtlich.

Es zeigen
- Fig. 1: ein Ablaufdiagramm des erfindungsgemäßen Verfahrens und
- Fig. 2: eine schematische Darstellung eines Domain-Name-Systems.

### DETAILLIERTE BESCHREIBUNG DER ERFINDUNG

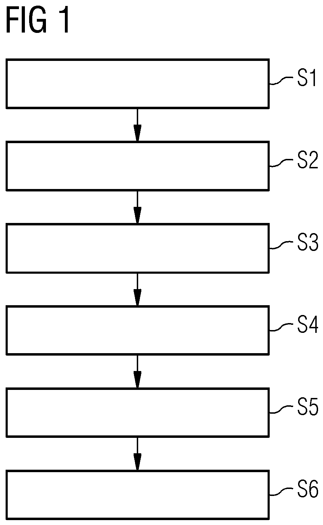

Fig. 1 ein Ablaufdiagramm des erfindungsgemäßen Verfahrens. Das Verfahren weist die folgenden Schritte auf:
- Schritt S1: Erstellen mindestens einer signierten Domain-Name-System-Information, wobei die mindestens eine signierte Domain-Name-System-Information durch eine kryptographische Signierung einer Domain-Name-System-Information erstellt wird, wobei die kryptographische Signierung außerhalb der Domain-Name-System-Server-Infrastruktur erstellt wird,
- Schritt S2: Erstellen zumindest eines Domain-Name-System-Container-Images, wobei das zumindest eine Domain-Name-System-Container-Image die signierte Domain-Name-System-Information und mindestens eine Domain-Name-System-Server-Software aufweist und
- Schritt S3: Speichern des zumindest einen Domain-Name-System-Container-Images in einer Container-Registry.

Diese Schritte dienen dem Speichern zumindest eines Domain-Name-System-Container-Images, wobei das Domain-Name-System-Container-Image zum Erstellen zumindest einer Domain-Name-System-Container-Instanz in einer Domain-Name-System-Infrastruktur ausgebildet ist.

Das Verfahren kann in einer bevorzugten Variante zum Erstellen zumindest einer Domain-Name-System-Container-Instanz in einer Domain-Name-System-Infrastruktur um die folgenden Schritte ergänzt werden:
- Schritt S4: Zugreifen auf das zumindest eine Domain-Name-System-Container-Image in der Container-Registry und
- Schritt S5: Ausführen des zumindest einen Domain-Name-System-Container-Images, wobei durch das Ausführen des zumindest einen Domain-Name-System-Container-Images die zumindest eine Domain-Name-System-Container-Instanz in der Domain-Name-System-Infrastruktur erstellt wird.

Das Verfahren kann in einer bevorzugten Variante zum Beantworten von Anfragen um die folgenden Schritte ergänzt werden:
- Schritt S6: Beantworten von Anfragen an die mindestens eine Domain-Name-System-Container-Instanz und/oder ein Ausliefern von Daten aus der mindestens einen Domain-Name-System-Container-Instanz. Hierfür ist an jedem Standort mindestens eine Domain-Name-System-Container-Instanz ausgebildet.

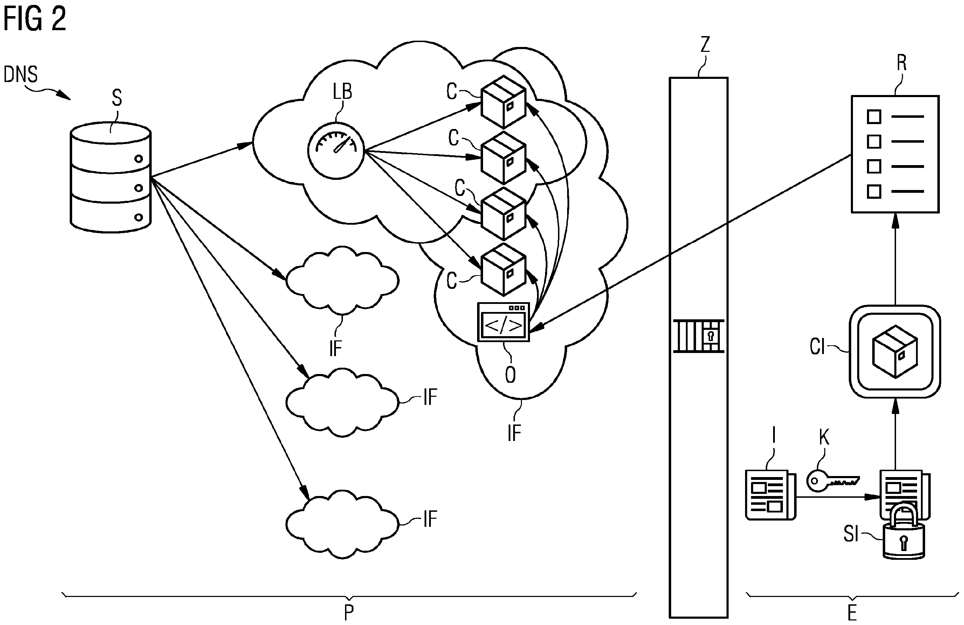

Fig. 2 zeigt zwei Bereiche: links den Bereich eines Providers eines Cloud-Netzwerks P / eines Cloud-Providers und rechts den Bereich eines Domain-Name-System-Domäneneigentümers E.

Im Bereich des Providers des Cloud-Netzwerks P / des Cloud-Provider befindet sind ein Domain-Name-System DNS. Das Domain-Name-System DNS weist einen Domain-Name-System-Server S auf. Der Domain-Name-System-Server S verwaltet vier Domain-Name-System-Infrastrukturen IF an unterschiedlichen Lokationen. Die Domain-Name-System-Infrastrukturen IF sind z.B. in Frankfurt, Singapur, New York, Buenos Aires in mehrfacher Ausführung identisch aufgebaut und werden durch den Provider des Cloud-Netzwerks P bereitgestellt. Der Provider des Cloud-Netzwerks P kann an jedem Ort ein anderer oder an jedem Ort der gleiche sein.

Jede Domain-Name-System-Infrastrukturen IF weist mindestens eine Domain-Name-System-Container-Instanz C auf (in Fig. 1 sind die Domain-Name-System-Container-Instanzen C nur für eine Domain-Name-System-Infrastruktur IF dargestellt).

Jede Domain-Name-System-Infrastrukturen IF weist außerdem einen Loadbalancer L und eine Orchestrierungssoftware O auf. Der Loadbalancer L misst einen Auslastungsgrad der Domain-Name-System-Container-Instanzen C. In Abhängigkeit des Auslastungsgrades wird von der Orchestrierungssoftware O eine Skalierung der Anzahl an Domain-Name-System-Container-Instanzen C geregelt. Bei einer hohen Auslastung der Domain-Name-System-Container-Instanzen C wird die Anzahl der Domain-Name-System-Container-Instanzen C erhöht, bei einer geringen Auslastung der Domain-Name-System-Container-Instanzen C wird die Anzahl der Domain-Name-System-Container-Instanzen C gesenkt.

Die Orchestrierungssoftware O und der Loadbalancer L können sowohl für jeden einzelnen Ort, an dem die Domain-Name-System-Infrastruktur IF aufgebaut ist, separat aufgebaut sein oder zentral alle aufgebauten Laufzeitumgebungen/Domain-Name-System-Infrastrukturen IF an den unterschiedlichen Orten steuern. In Fig. 2 ist die Orchestrierungssoftware O und der Loadbalancer L in jeder Domain-Name-System-Infrastruktur IF separat ausgebildet (nur für eine Domain-Name-System-Infrastruktur IF dargestellt).

Fig. 2 zeigt außerdem eine Zugriffssicherung Z. Die Zugriffssicherung Z trennt den Bereich des Providers des Cloud-Netzwerks P links in Fig. 2 von dem Bereich des Domain-Name-System-Domäneneigentümers E rechts in Fig. 2. Der Domain-Name-System-Domäneneigentümers E ist Eigentümer einer Domain-Name-System-Domäne innerhalb der Domain-Name-System-Infrastrukturen IF. Geschützt durch die Zugriffssicherung Z wird auf Seiten des Domain-Name-System-Domäneneigentümers E eine Domain-Name-System-Information I mit einer kryptographischen Signierung K, z.B. DNSSEC versehen und so integritätsgeschützt. Dadurch wird eine signierte Domain-Name-System-Information SI erstellt. Die signierte Domain-Name-System-Information SI wird gemeinsam mit einer Domain-Name-System-Software in Form eines Domain-Name-System-Container-Image CI in einer Container-Registry R abgespeichert.

Die Container-Registry R kann entweder, wie in Fig. 2 dargestellt auf der Seite des DNS-Domäneneigentümers E oder beim Provider des Cloud-Netzwerks P liegen. Auf Seiten des Cloud-Providers P kann die Container-Registry entweder für alle Domain-Name-System-Infrastrukturen IF zentral bereitgestellt werden oder alternativ an jedem Ort, an dem eine Domain-Name-System-Infrastruktur IF ausgebildet ist, bereitgestellt werden.

Durch ein Zugreifen auf das Domain-Name-System-Container-Images CI in der Container-Registry R und ein Ausführen des Domain-Name-System-Container-Images CI wird eine Domain-Name-System-Container-Instanz C in der Domain-Name-System-Infrastruktur erstellt. Das Erstellen der System-Container-Instanz C wird durch die Orchestrierungssoftware O ausgeführt.

Das genannte Zugreifen auf das Domain-Name-System-Container-Images CI und das Ausführens des Domain-Name-System-Container-Images CI können von einem DNS-Domäneneigentümer E selbst durchgeführt werden oder in einer alternativen Ausführungsform von dem Providers des Cloud-Netzwerks P / Cloud-Provider bzw. Anbieter der Container-Infrastruktur durchgeführt werden.

Das Ausführen des zumindest einen Domain-Name-System-Container-Images kann auch als Inbetriebnahme einer DNS-Container-Instanz oder als Orchestrierung bezeichnet werden. Die Orchestrierung führt die Orchestrierungssoftware O durch.

Wenn die erfindungsgemäßen Schritte des Zugreifens auf das zumindest eine Domain-Name-System-Container-Images CI und des Ausführens des zumindest einen Domain-Name-System-Container-Images CI von einem Providers des Cloud-Netzwerks P / Cloud-Provider durchgeführt werden, benötigt dieser lediglich Zugriff auf die Container-Registry R und die Container-Registry R könnte weiterhin wie in Fig. 2 dargestellt auf Seiten des Providers des DNS-Domäneneigentümer E rechts der Zugriffssicherung Z ausgebildet werden. In diesem Fall stellt der DNS-Domäneneigentümer E das Domain-Name-System-Container-Image CI mit der signierte Domain-Name-System-Information SI in die Container-Registry R ein. Die Container-Registry R kann entweder auf der Seite des DNS-Domäneneigentümers E oder beim Cloud-Provider P liegen.

Sofern ein DNS-Domäneneigentümer E keinen Zugriff auf die Orchestrierungssoftware O zum Durchführen der erfindungsgemäßen Schritte des Zugreifens auf das Domain-Name-System-Container-Images CI und des Ausführens des Domain-Name-System-Container-Images CI hat, prüft der Provider des Cloud-Netzwerks P / Cloud-Provider wiederholt oder periodisch (insbesondere stündlich) und/oder zu vorgebaren Zeitpunkten, ob es eine neue Version des Domain-Name-System-Container-Images CI gibt und lädt gegebenenfalls die neue/aktuelle Version des Domain-Name-System-Container-Images CI. Anschließend führt die Orchestrierungssoftware O das Domain-Name-System-Container-Images CI aus und erstellt eine Domain-Name-System-Container-Instanz C.

In einer weiteren Weiterbildung hat der DNS-Domäneneigentümer Zugriff auf die Orchestrierungssoftware bzw. auf die relevanten Funktionen bei der Orchestrierungssoftware und das Durchführen der erfindungsgemäßen Schritte des Zugreifens auf das zumindest eine Domain-Name-System-Container-Images und des Ausführens des zumindest einen Domain-Name-System-Container-Images kann durch den DNS-Domäneneigentümer getriggert werden.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- C: Domain-Name-System-Container-Instanz
- CI: Domain-Name-System-Container-Image
- DNS: Domain-Name-System
- E: Domain-Name-System-Domäneneigentümer
- I: Domain-Name-System-Information
- IF: Domain-Name-System-Infrastruktur
- K: kryptographische Signierung
- LB: Loadbalancer
- O: Orchestrierungssoftware
- P: Provider des Cloud-Netzwerks
- R: Container-Registry
- S: Domain-Name-System-Server
- SI: signierte Domain-Name-System-Information
- Z: Zugriffssicherung

- Sj: Schritt 1, j = [1; 6]

## Patentansprüche

1. Verfahren zum Speichern zumindest eines Domain-Name-System-Container-Images (CI), wobei das Domain-Name-System-Container-Image (CI) zum Erstellen zumindest einer Domain-Name-System-Container-Instanz (C) in einer Domain-Name-System-Infrastruktur (IF) ausgebildet ist, mit den Schritten:
- Erstellen (S1) mindestens einer signierten Domain-Name-System-Information (SI), wobei die mindestens eine signierte Domain-Name-System-Information (SI) durch eine kryptographische Signierung (K) einer Domain-Name-System-Information(I) erstellt wird, wobei die kryptographische Signierung (K) außerhalb der Domain-Name-System-Server-Infrastruktur (IF) erstellt wird,
- Erstellen (S2) zumindest eines Domain-Name-System-Container-Images (CI), wobei das zumindest eine Domain-Name-System-Container-Image (CI) die signierte Domain-Name-System-Information (I) und mindestens eine Domain-Name-System-Server-Software aufweist und
- Speichern (S3) des zumindest einen Domain-Name-System-Container-Images (CI) in einer Container-Registry (R).

2. Verfahren nach Anspruch 1,
mit den weiteren Verfahrensschritten:
- Zugreifen (S4) auf das zumindest eine Domain-Name-System-Container-Image (CI) in der Container-Registry (R) und
- Ausführen (S5) des zumindest einen Domain-Name-System-Container-Images (CI), wobei durch das Ausführen (S5) des zumindest einen Domain-Name-System-Container-Images (CI) die zumindest eine Domain-Name-System-Container-Instanz (C) in der Domain-Name-System-Infrastruktur (IF) erstellt wird.

3. Verfahren nach einem der vorhergehenden Ansprüche,
mit dem weiteren Verfahrensschritt:
- Beantworten (S6) von Anfragen an die mindestens eine Domain-Name-System-Container-Instanz (C) und/oder ein Ausliefern von Daten aus der mindestens einen Domain-Name-System-Container-Instanz (C).

4. Verfahren nach einem der vorhergehenden Ansprüche,
wobei die mindestens eine signierten Domain-Name-System-Information (SI) unter einer Zugriffssicherung (Z) erstellt wird.

5. Verfahren nach einem Anspruch 4,
wobei die Zugriffssicherung (Z) durch eine Firewall erstellt wird.

6. Verfahren nach einem Anspruch 4 oder 5,
wobei Schlüssel der Zugriffssicherung (Z) durch ein Hardware-Sicherheitsmodul geschützt werden.

7. Verfahren nach einem der vorhergehenden Ansprüche,
wobei die Domain-Name-System-Server-Infrastruktur (IF) mittels mindestens eines Cloud-Netzwerks (P) bereitgestellt wird.

8. Verfahren nach einem der vorhergehenden Ansprüche,
wobei die kryptographische Signierung (K) als DNSSEC-Signierung erstellt wird.

9. Verfahren nach einem der vorhergehenden Ansprüche,
wobei ein Auslastungsgrad der Domain-Name-System-Container-Instanz (C) bestimmt wird.

10. Verfahren nach Anspruch 9,
wobei eine Anzahl an Domain-Name-System-Container-Instanzen (C) in Abhängigkeit des Auslastungsgrads bestimmt wird.

11. Verfahren nach Anspruch 10,
wobei die Anzahl durch ein Zuschalten und ein Abschalten von Domain-Name-System-Container-Instanz (C) eingestellt wird.

12. Verfahren nach Anspruch 11,
wobei das Zuschalten und/oder das Abschalten durch eine Orchestrierungssoftware (O) durchgeführt wird.

13. Verfahren nach Anspruch 11 oder 12,
wobei das Zuschalten und/oder das Abschalten durch eine Container-as-a-Service Lösung umgesetzt wird.

14. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 13 ausgeführt werden, wenn das Computerprogramm auf der Recheneinheit ausgeführt wird.

15. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 13 ausgeführt werden, wenn das Computerprogramm auf der Recheneinheit ausgeführt wird.

## Claims

1. Method for storing at least one domain name system container image (CI), wherein the domain name system container image (CI) is designed to create at least one domain name system container instance (C) in a domain name system infrastructure (IF), having the steps of:
- creating (S1) at least one item of signed domain name system information (SI), wherein the at least one item of signed domain name system information (SI) is created by means of a cryptographic signature (K) of an item of domain name system information (I), wherein the cryptographic signature (K) is created outside the domain name system server infrastructure (IF),
- creating (S2) at least one domain name system container image (CI), wherein the at least one domain name system container image (CI) has the signed domain name system information (I) and at least one item of domain name system server software, and
- storing (S3) the at least one domain name system container image (CI) in a container registry (R).

2. Method according to Claim 1,
having the further method steps of:
- accessing (S4) the at least one domain name system container image (CI) in the container registry (R), and
- executing (S5) the at least one domain name system container image (CI), wherein the at least one domain name system container instance (C) is created in the domain name system infrastructure (IF) by executing (S5) the at least one domain name system container image (CI).

3. Method according to either of the preceding claims, having the further method step of:
- responding (S6) to requests sent to the at least one domain name system container instance (C) and/or delivering data from the at least one domain name system container instance (C).

4. Method according to one of the preceding claims,
wherein the at least one item of signed domain name system information (SI) is created with access protection (Z).

5. Method according to Claim 4,
wherein the access protection (Z) is created by a firewall.

6. Method according to Claim 4 or 5,
wherein keys of the access protection (Z) are protected by means of a hardware security module.

7. Method according to one of the preceding claims,
wherein the domain name system server infrastructure (IF) is provided by means of at least one cloud network (P).

8. Method according to one of the preceding claims,
wherein the cryptographic signature (K) is created as a DNSSEC signature.

9. Method according to one of the preceding claims,
wherein a degree of utilization of the domain name system container instance (C) is determined.

10. Method according to Claim 9,
wherein a number of domain name system container instances (C) is determined on the basis of the degree of utilization.

11. Method according to Claim 10,
wherein the number is set by connecting and disconnecting a domain name system container instance (C).

12. Method according to Claim 11,
wherein the connection and/or disconnection is carried out by orchestration software (O).

13. Method according to Claim 11 or 12,
wherein the connection and/or disconnection is implemented by means of a container-as-a-service solution.

14. Computer program product comprising a computer program, wherein the computer program can be loaded into a memory device of a computing unit, wherein the steps of a method according to one of Claims 1 to 13 are carried out with the computer program when the computer program is executed on the computing unit.

15. Computer-readable medium on which a computer program is stored, wherein the computer program can be loaded into a memory device of a computing unit, wherein the steps of a method according to one of Claims 1 to 13 are carried out with the computer program when the computer program is executed on the computing unit.

## Revendications

1. Procédé de stockage d'au moins une image de conteneur de système de nom de domaine (CI), l'image de conteneur de système de nom de domaine (CI), étant conçue pour créer au moins une instance de conteneur de système de nom de domaine (C) dans une infrastructure de système de nom de domaine (IF), comportant les étapes suivantes :
- génération (S1) d'au moins une information de système de nom de domaine (SI) signée, l'au moins une information de système de nom de domaine (SI) signée étant générée à l'aide d'une signature (K) cryptographique d'une information de système de nom de domaine (I), la signature cryptographique (K) étant générée à l'extérieur de l'infrastructure de serveur de système de nom de domaine (IF),
- génération (S2) d'au moins une image de conteneur de système de nom de domaine (CI), l'au moins une image de conteneur de système de nom de domaine (CI) comportant l'information de système de nom de domaine signée (I) et au moins un logiciel de serveur de système de nom de domaine et
- stockage (S3) de l'au moins une image de conteneur de système de nom de domaine (CI) dans un registre de conteneur (R) .

2. Procédé selon la revendication 1,
comportant les étapes de procédé supplémentaires suivantes :
- accès (S4) à l'au moins une image de conteneur de système de nom de domaine (CI) dans le registre de conteneur (R) et
- exécution (S5) de l'au moins une image de conteneur de système de nom de domaine (CI), l'exécution (S5) de l'au moins une image de conteneur de système de nom de domaine (CI) entraînant la génération de l'au moins une instance de conteneur de système de nom de domaine (C) au sein de l'infrastructure de système de nom de domaine (IF).

3. Procédé selon l'une des revendications précédentes, comportant l'étape de procédé supplémentaire suivante :
- réponse (S6) à des demandes adressées à l'au moins une instance de conteneur de système de nom de domaine (C) et / ou fourniture de données de l'au moins une instance de conteneur de système de nom de domaine (C).

4. Procédé selon l'une des revendications précédentes, dans lequel l'au moins une information de système de nom de domaine (SI) signée est générée sous une sécurisation de l'accès (Z).

5. Procédé selon la revendication 4, dans lequel la sécurisation de l'accès (Z) est assurée par un pare-feu.

6. Procédé selon la revendication 4 ou 5, dans lequel des clés de la sécurisation de l'accès (Z) sont protégées par un module de sécurité matériel.

7. Procédé selon l'une des revendications précédentes, dans lequel l'infrastructure de serveur de système de nom de domaine (IF) est mise à disposition par au moins un réseau de nuage (P).

8. Procédé selon l'une des revendications précédentes, dans lequel la signature cryptographique (K) est générée sous forme de signature DNSSEC.

9. Procédé selon l'une des revendications précédentes, dans lequel on détermine un degré d'utilisation de l'instance de conteneur de système de nom de domaine (C).

10. Procédé selon la revendication 9, dans lequel on détermine un nombre d'instances de conteneur de système de nom de domaine (C) en fonction du degré d'utilisation.

11. Procédé selon la revendication 10, dans lequel le nombre est ajusté grâce à une activation et une désactivation d'instances de conteneur de système de nom de domaine (C).

12. Procédé selon la revendication 11, dans lequel l'activation et / ou la désactivation est exécutée par un logiciel d'orchestration (0).

13. Procédé selon la revendication 11 ou 12, dans lequel l'activation et / ou la désactivation est mise en œuvre par une solution « container-as-a-service ».

14. Produit de programme informatique, comportant un programme informatique, le programme informatique pouvant être chargé dans une mémoire d'une unité de calcul, les étapes d'un procédé selon l'une des revendications 1 à 13 étant exécutées par ledit programme informatique lorsque le programme informatique est exécuté dans l'unité de calcul.

15. Support lisible par ordinateur, sur lequel un programme informatique est stocké, le programme informatique pouvant être chargé dans une mémoire d'une unité de calcul, les étapes d'un procédé selon l'une des revendications 1 à 13 étant exécutées par ledit programme informatique lorsque le programme informatique est exécuté dans l'unité de calcul.
